# EUROPÄISCHE PATENTSCHRIFT

(11) **EP 1 648 742 B1**
(45) Veröffentlichungstag und Bekanntmachung des Hinweises auf die Patenterteilung: **29.11.2006**
(21) Anmeldenummer: 04734471.8
(22) Anmeldetag: 22.05.2004
(51) Int. Cl.: B60R 13/08, B60N 3/04

(54) **SCHALLISOLIERENDES VERBUNDTEIL**
SOUND-INSULATING COMPOSITE PART
PIECE COMPOSITE INSONORISANTE

(30) Priorität: 25.07.2003 DE 10334273
(43) Veröffentlichungstag der Anmeldung: 26.04.2006
(73) Patentinhaber: Carcoustics Tech Center GmbH, 51381 Leverkusen (DE)
(72) Erfinder: BLÖMELING, Heinz, 42799 Leichlingen (DE)
(74) Vertreter: Meyer, Hans-Joachim
(86) Internationale Anmeldenummer: PCT/EP2004/005531
(87) Internationale Veröffentlichungsnummer: WO 2005/018999

(56) Entgegenhaltungen:
- EP-A- 0 798 160
- US-A- 5 749 993

## Beschreibung

Die Erfindung betrifft ein schallisolierendes Verbundteil, insbesondere für Kraftfahrzeuge, mit einer Schwerschicht und mindestens einer Lage aus offenporigem, elastischem Absorbermaterial.

Zur Herstellung von schallabsorbierenden Verbundteilen sind im Stand der Technik eine Vielzahl von unterschiedlichen Verfahren bekannt geworden. Die Verbundteile werden häufig der Form ihres Einbauortes angepasst. Dies gilt insbesondere für Teppichteile, die den Konturen eines Kraftfahrzeugbodens anzupassen sind.

In der EP 0 169 627 A2 ist beispielsweise ein Verfahren zur Herstellung eines Teppichs mit formgeschäumtem Rücken für Kraftfahrzeuge offenbart, bei dem eine eine Schwerschicht aufweisende Teppichbahnware entsprechend der Karosserieform verformt und anschließend an vorgegebenen Stellen partiell mit Weichschaum hinterschäumt wird. Dabei bildet der Weichschaum entsprechend der Kontur des Karosseriebodens unterschiedlich dicke Polster.

Die DE 40 38 025 A1 beschreibt ein Verfahren zur Herstellung eines Auskleidungsteils für ein Kraftfahrzeug, bei dem an einer Deckschicht aus einem flächigen Deckteil, insbesondere einer Teppichware, rückseitig eine Schwerschicht als Schwerschichtmasse in einem Formwerkzeug angegossen oder angespritzt wird. Die Schwerschichtmasse wird dabei entsprechend den örtlich verschiedenen akustischen Erfordernissen in unterschiedlichen Dicken und dementsprechend unterschiedlichen Flächengewichten an das. Deckteil angegossen bzw. angespritzt.

Aus der gattungsbildenden EP 0 249 939 A2 ist ein mehrlagiges Formteil bekannt, das als Wärmeisolator oder dergleichen verwendet wird. Das bekannte Formteil weist einen aus thermoplastischem Harz gebildeten Körper und eine elastische Schaumstofflage auf, wobei an dem Körper eine Mehrzahl von Stegen ausgeformt ist. Die Stege sind aus dem gleichen Material wie der Körper gebildet, wobei das Material der Stege durch die Schaumstofflage hindurchgepresst ist. Bei den beschriebenen und dargestellten Ausführungsbeispielen entspricht die Dicke der Schaumstofflage entweder der Höhe der Stege des Körpers, oder die Höhe der Stege ist größer als die Dicke der Schaumstofflage.

Aus der EP 0 798 160 A1 ist ein Belag zur Fußabstützung für Bodenmatten von Kraftfahrzeugen bekannt, der aus einer oberseitigen Kontaktfläche und einer unterseitigen Schicht aus thermoplastischem Schaumstoff besteht, welche das Bodenblech des Fahrzeuges berührt. Die Kontaktfläche trägt an ihrer Unterseite abstehende Zwischenwände zum Festhalten der unterseitigen Schaumstoffschicht. Die Höhe dieser Zwischenwände ist kleiner oder gleich der Dicke der Schaumstoffschicht. Die Zwischenwände erstrecken sich dabei parallel mit einem bestimmten Abstand über dem Bodenblech, um während einer unfallbedingten verformung des Bodenblechs eine gewisse Energieaufnahme zu ermöglichen.

Der vorliegenden Erfindung liegt die Aufgabe zugrunde, ein schallisolierendes Verbundteil der eingangs genannten Art anzugeben, das insbesondere als Bodenbelag für ein Kraftfahrzeug geeignet und bei kostengünstiger Herstellbarkeit an die Kontur des jeweiligen Einbauortes angepasst ist, wobei die Absorberlage strukturbedingte Höhenunterschiede, z.B. Vertiefungen, die in einem als Unterlage dienenden Karosserieblech eingeformt sind, ausgleichen soll.

Diese Aufgabe wird durch ein schallisolierendes Verbundteil mit den Merkmalen des Anspruchs 1 gelöst.

Das erfindungsgemäße Verbundteil hat den Vorteil, dass das Formen der Schwerschicht und deren Verbinden mit mindestens einer elastischen, offenporigen Absorberlage in nur einem Arbeitsgang erfolgt. Ein weiterer Vorteil der Erfindung besteht darin, dass sich Höhe und Breite der Stege durch eine entsprechende Gestaltung des Formpresswerkzeuges auf einfache Weise ändern lassen. Durch unterschiedliche Steghöhen lassen sich beispielsweise Höhenunterschiede in einem Bodenblech einer Kraftfahrzeugs sehr gut ausgleichen. Bei einheitlicher Dicke der offenporigen Absorberlage wird ein Höhenausgleich zudem auch dadurch realisiert, dass der Abstand der Stege zueinander bzw. die Größe von durch die Stege gebildeten Kästchen variiert wird. Auf diese Weise entstehen in der offenporigen elastischen Absorberlage zwischen den Stegen unterschiedlich dicke Absorberpolster.

Ferner schafft die Erfindung die Möglichkeit, relativ große, akustisch wirksame Verkleidungen, insbesondere Stirnwand- und Bodenverkleidungen für Kraftfahrzeuge vergleichsweise kostengünstig herzustellen. Denn das zur Herstellung des erfindungsgemäßen Verbundteils angewandte Fließpressen bzw. Spritzpressen ermöglicht es, relativ großflächige Schwerschichten auch aus solchen plastifizierbaren Kunststoffmassen, insbesondere thermoplastischen Elastomeren herzustellen, die sich in Spritzgießwerkzeugen nur schwierig herstellen lassen, nämlich z.B. nur bei Einsatz aufwendig konstruierter Spritzgießwerkzeuge bzw. nur durch Verwendung von das Fließverhalten der Kunststoffmassen verbessernden Zusätzen. Die für die Herstellung des erfindungsgemäßen Verbundteils erforderlichen Presswerkzeuge sind dagegen vergleichsweise einfach aufgebaut und somit entsprechend kostengünstig erhältlich. Die Schwerschicht des erfindungsgemäßen Verbundteils kann dabei so geformt werden, dass sie Bereiche unterschiedlicher Dicke aufweist. Zudem ermöglicht das erfindungsgemäße.Verbundteil eine im Wesentlichen abfallfreie sowie materialsparende Herstellung seiner Schwerschicht.

Bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen in schematischer Darstellung:
- Fig. 1: eine Querschnittsansicht auf das Unterwerkzeug und das Oberwerkzeug einer Formpresse in geöffnetem Zustand;
- Fig. 2: eine Querschnittsansicht auf ein schallisolierendes Verbundteil, wie es mit einer Formpresse gemäß Fig. 1 herstellbar ist;
- Fig. 3: eine Querschnittsansicht auf das Unterwerkzeug und das Oberwerkzeug einer weiteren Formpresse in geöffnetem Zustand;
- Fig. 4: eine Querschnittsansicht auf ein schallisolierendes Verbundteil, wie es mit einer Formpresse gemäß Fig. 3 herstellbar ist;
- Fig. 5: eine Querschnittsansicht auf das Unterwerkzeug und das Oberwerkzeug einer dritten Formpresse in geöffnetem Zustand;
- Fig. 6: eine Querschnittsansicht auf ein schallisolierendes Verbundteil, wie es mit einer Formpresse gemäß Fig. 5 herstellbar ist; und
- Fig. 7: eine perspektivische Ansicht auf die Unterseite eines erfindungsgemäßen Teppichbodenaufbaus für ein Kraftfahrzeug.

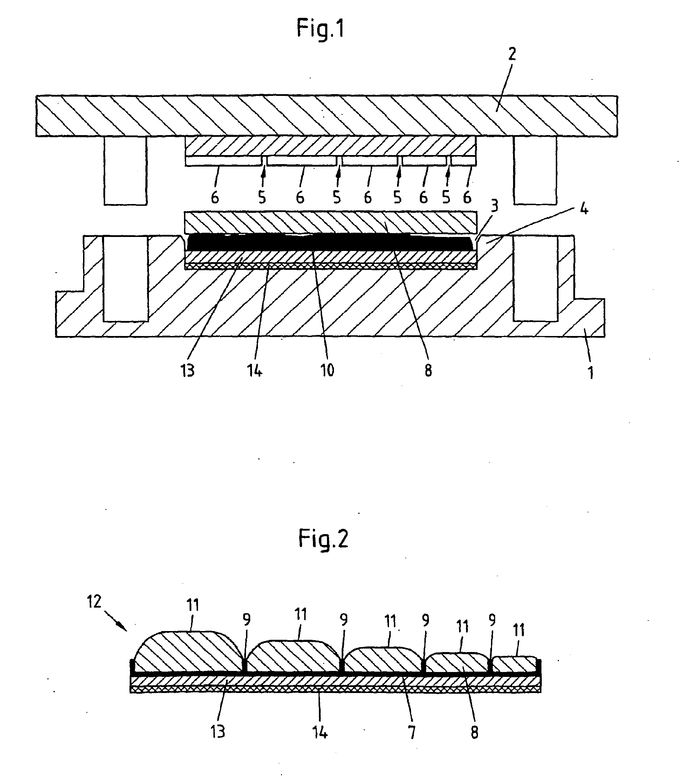

In den Figuren 1, 3 und 5 ist jeweils mit 1 ein unteres Formwerkzeug (Unterwerkzeug) und mit 2 ein oberes Formwerkzeug (Oberwerkzeug) einer ansonsten nicht näher dargestellten Formpresse zur Herstellung eines erfindungsgemäßen Verbundteils bezeichnet. Das Oberwerkzeug 2 und/oder das Unterwerkzeug 1 können mit einer Heizeinrichtung (nicht dargestellt) und/oder Kühleinrichtung (nicht dargestellt) ausgestattet sein.

Das Unterwerkzeug 1 enthält eine Formkavität 3, die durch eine umlaufende Tauchkante 4 definiert ist. Das Oberwerkzeug 2 ist so gestaltet, dass es mit geringem Spiel in die Kavität 3 eintauchen kann. Der in die Kavität 3 eintauchende Teil des Oberwerkzeuges 2 weist eine Mehrzahl von Stege formenden Ausnehmungen 5 auf.

Ferner ist zu erkennen, dass die Ausnehmungen 5 unterschiedlich zueinander beabstandet sind. Zumindest ein Teil der Ausnehmungen 5 geht ring- bzw. rahmenförmig ineinander über. Dementsprechend definieren die Ausnehmungen 5 unterschiedlich große erhabene Pressfelder 6. Die Anordnung, Formgebung und Bemessung der Pressfelder 6 bzw. Ausnehmungen 5 erfolgt nach akustischen Kriterien und in Anpassung an die geometrischen Gegebenheiten am Einbauort des mit der Formpresse herzustellenden Verbundteils, wie_nachstehend noch weiter erläutert wird.

Mit den in den Figuren 1, 3 und 5 dargestellten Formwerkzeuge 1, 2 lassen sich verschiedene schallisolierende Verbundteile herstellen. Die Verbundteile weisen dabei wenigstens eine Schwerschicht 7 und wenigstens eine Lage 8 aus einem offenporigen, elastischen Absorbermaterial auf, wobei an der Schwerschicht Stege 9 ausgeformt sind, die aus dem Material der Schwerschicht 7, einstückig mit der Schwerschicht 7 gebildet sind. Die Schwerschicht 7 ist im Wesentlichen flächig und im Wesentlichen durchgehend, d.h. ununterbrochen ausgebildet.

Das Schwerschichtmaterial wird als plastifizierte Masse 10 im Strangablegeverfahren in die offene Kavität 3 des Unterwerkzeuges 1 eingebracht. Bei dem Schwerschichtmaterial handelt es sich um eine hochgefüllte Kunststoffmasse, vorzugsweise um PE-EVA (Polyethylen-Ethylen-VinylAcetat) oder ein thermoplastisches Elastomer (TPE). Insbesondere können die thermoplastischen Polyolefin-Elastomere TPO oder TPV verwendet werden, die aus Polypropylen mit bis zu 65% eingearbeitetem Ethylen-Propylen-[Dien] Kautschuk (EP [D] M) bestehen. Gut geeignet sind ferner auch thermoplastische Elastomere vom Typ TPS (Styrol TPE).

Die Plastifizierung der Kunststoffmasse 10 erfolgt mittels einer Extrudervorrichtung (nicht gezeigt). Die plastifizierte Masse wird in Chargen dosiert, wobei jede Charge im Wesentlichen genau dem Volumen einer herzustellenden Schwerschicht 7 entspricht. Die Schwerschicht 7 wird somit abfallfrei durch Einbringen eines bauteilspezifischen Volumens des Schwerschichtmaterials hergestellt. Es liegt im Rahmen der Erfindung, an bestimmten Stellen der Kavität 3 unterschiedlich zusammengesetzte Schwerschichtmassenanteile einzubringen. Die Schwerschichtmassenanteile können sich dabei insbesondere hinsichtlich ihres Füllstoffanteils unterscheiden, so dass die daraus hergestellte Schwerschicht 7 schließlich Bereiche unterschiedlicher Dichte bzw. Flächengewichte aufweist.

Auf die in die Kavität 3 eingebrachte Schwerschichtmasse 10 wird anschließend die offenporige, elastische Absorberlage 8 (Schalldämpfungslage) aufgelegt. Die Absorberlage 8 ist vorzugsweise aus einem offenporigen Schaumstoff gebildet, der eine Stauchhärte σ_{d40} von nicht weniger als 4 kPa und einen Druckverformungsrest im Bereich von 3 bis 6 % (bei vorherigem Zusammendrücken um 50 % und einer 72-stündigen Lagerung bei 70°C) aufweist. Eine solche Schaumstofflage besitzt ein hohes Rückstellvermögen, was für die Erzielung eines möglichst großen Absorbervolumens nach Abschluss des Formpressvorgangs von Vorteil ist. Unter der Stauchhärte σ_{d40} wird die zu einer Verformung von 40% erforderliche Druckspannung verstanden (vgl. DIN EN ISO 3386-1/2). Der Druck-Verformungsrest ist in der DIN EN ISO 1856 definiert. Danach werden Quader von 50 mm x 50 mm x 25 mm in der Dicke von 25 mm zwischen Stahlplatten um 50 oder 75% zusammengedrückt und 72 Stunden bei Normalklima bzw. bei 70°C gelagert. Der Druck-Verformungsrest ist der nach Entlastung bestimmte plastische Verformungsanteil (bleibende Verformung) in %.

Die Absorberlage 8 besteht vorzugsweise aus weichelastischem, offenporigem PUR-Schaumstoff vom Polyether-Typ. Sie hat beispielsweise eine ursprüngliche Schichtdicke im Bereich von 10 bis 50 mm. Die Absorberlage 8 kann ein- oder mehrschichtig ausgebildet sein. Sie kann insbesondere außenseitig mit einem Vlies, beispielsweise mit einem Spinnvlies, beschichtet sein.

Die Absorberlage 8 wird in Form eines plattenförmigen Zuschnitts oder geschäumten Spritzgussteils auf die Schwerschichtmasse gelegt. Das Auflegen erfolgt vorzugsweise mittels eines Roboters. Alternativ kann die Absorberlage 8 auch aus mehreren Zuschnitten und/oder geschäumten Spritzgussteilen gebildet werden. Der oder die Zuschnitte bzw. das geschäumte Spritzgussteil bzw. die geschäumten Spritzgussteile sind so bemessen, dass beim Schließen der Formwerkzeuge 1, 2 kein Absorbermaterial an der Tauchkante 4 des Unterwerkzeuges 1 abgeschnitten wird, so dass insgesamt abfallfrei gearbeitet wird.

Durch Schließen der Presse wird das plastifizierte Schwerschichtmaterial 10 in der Kavität 3 unter Fließen in die Form der Schwerschicht 7 gepresst und bildet dabei in die Absorberlage 8 hinein- und/oder durch die Absorberlage 8 hindurchgepresste Stege 9 (vgl. Fig. 2). Im Bereich der erhabenen Pressfelder 6 dringt das Schwerschichtmaterial 10 dagegen nur geringfügig in die Absorberlage 8 ein, so dass es dort zu einer mehr oder weniger auf die Oberflächen von Schwerschicht 7 und Absorberlage 8 beschränkte stoffschlüssige Verbindung kommt. Das relativ hohe Rückstellvermögen des elastischen Absorbermaterials bzw. Schaumstoffs stellt sicher, dass sich nach dem Öffnen der Formwerkzeuge 1, 2 polsterartige Bereiche 11 zwischen den Stegen 9 des fertigen Verbundteils 12 ergeben.

Bei den Formwerkzeugen gemäß Fig. 1 sind die die Stege 9 formenden Ausnehmungen 5 im Wesentlichen gleich tief und gleich breit ausgebildet. Dementsprechend entsteht eine Schwerschicht 7 mit daran einstückig ausgebildeten Stegen 9, die im Wesentlichen gleich hoch und gleich bereit sind. Die Ausnehmungen 5 und dementsprechend die Stege 9 sind gitterartig ausgebildet, so dass sie Kästchen definieren, die polygonal, beispielsweise dreieckig und/oder rechteckig, insbesondere quadratisch ausgebildet sind.

Wie insbesondere in Fig. 2 zu erkennen ist, haben die polsterartigen Bereiche 11 der Absorberlage 8 unterschiedliche Dicken, obwohl die mit der Schwerschichtmasse 10 verpresste Absorberlage 8 ursprünglich eine im Wesentlichen einheitliche Dicke besaß. Die Dicke der polsterartigen Absorberbereiche 11 (Absorberstreifen bzw. Absorberfelder) hängt vom Abstand der Ausnehmungen 5 bzw. Stege 9 ab. Je größer der Abstand bzw. das von den Stegen 9 gebildete Kästchen ist, desto dicker ist der polsterartige Bereich 11, wobei die maximale Dicke der ursprünglichen Dicke der Absorberlage 8 vor dem Verpressen entspricht.

Die gegenüber den Stegen 9 polsterartig vorstehenden Absorberbereiche 11 sind nicht nur unterschiedlich dick, sie besitzen zugleich unterschiedliche Verdichtungsgrade bzw. Strömungswiderstände. In den Bereichen, in denen die Stege 9 mit relativ geringem Abstand zueinander angeordnet sind, ist die Absorberlage 8 mehr eingezwängt und damit stärker verdichtet als in Bereichen, in denen die Stege 9 mit größerem Abstand zueinander angeordnet sind. Den geringsten Verdichtungsgrad und damit geringsten Strömungswiderstand weist die Absorberlage 8 dort auf, wo sie sich gegebenenfalls bis auf ihre ursprüngliche Dicke zurückstellen kann. Die Ausbildung unterschiedlich großer und unterschiedlich dicker, polsterartig gegenüber den Stegen 9 vorstehender Absorberbereiche 11 ermöglicht daher nicht nur eine geometrische Anpassung des Verbundteils an Höhenunterschiede bzw. Vertiefungen eines unterliegenden Karosserieblechs; durch die damit einhergehende örtliche Variation des Verdichtungsgrades bzw. Strömungswiderstandes der Absorberlage 8 lässt sich auch die Bandbreite der Schallabsorption örtlich unterschiedlich einstellen.

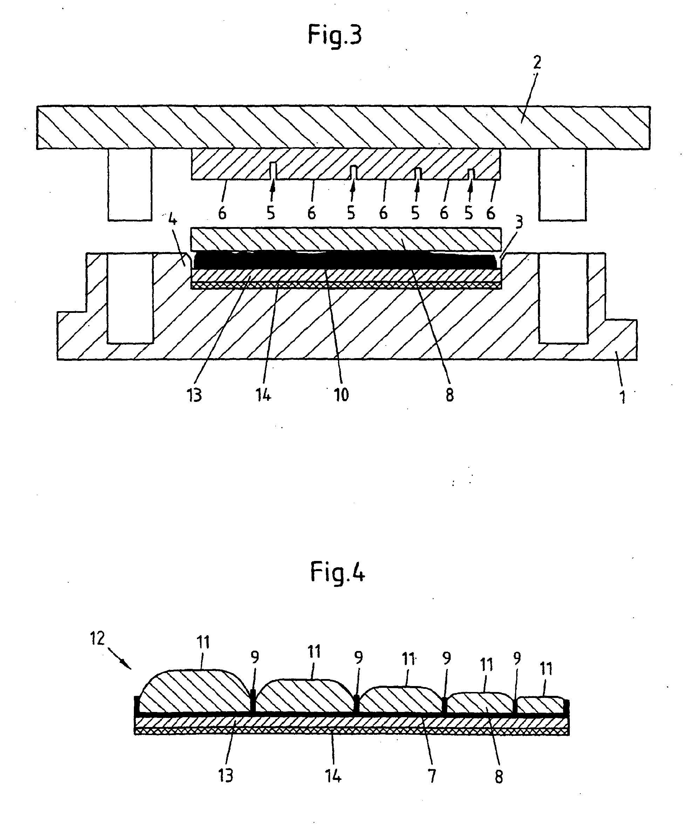

Bei dem Ausführungsbeispiel gemäß den Figuren 3 und 4 sind die Ausnehmungen 5 bzw. Stege 9 nicht nur unterschiedlich zueinander beabstandet, die Ausnehmungen 5 haben zudem auch unterschiedliche Tiefen und die Stege 9 dementsprechend unterschiedliche Höhen. Die Steghöhen können beispielsweise im Bereich von 3 bis 70 mm liegen. Auch hier sind die Ausnehmungen 5 und dementsprechend die Stege 9 vorzugsweise gitterartig ausgebildet. Die Tiefe der Ausnehmungen 5 ist jeweils kleiner als die Ursprungsdicke (Ausgangsdicke) der Absorberlage 8.

Durch die Ausbildung unterschiedlicher Steghöhen und/oder die Ausbildung unterschiedlich dicker Absorberbereiche 11 lässt sich das erfindungsgemäße Verbundteil 12 an die geometrische Kontur des Einbauortes anpassen.

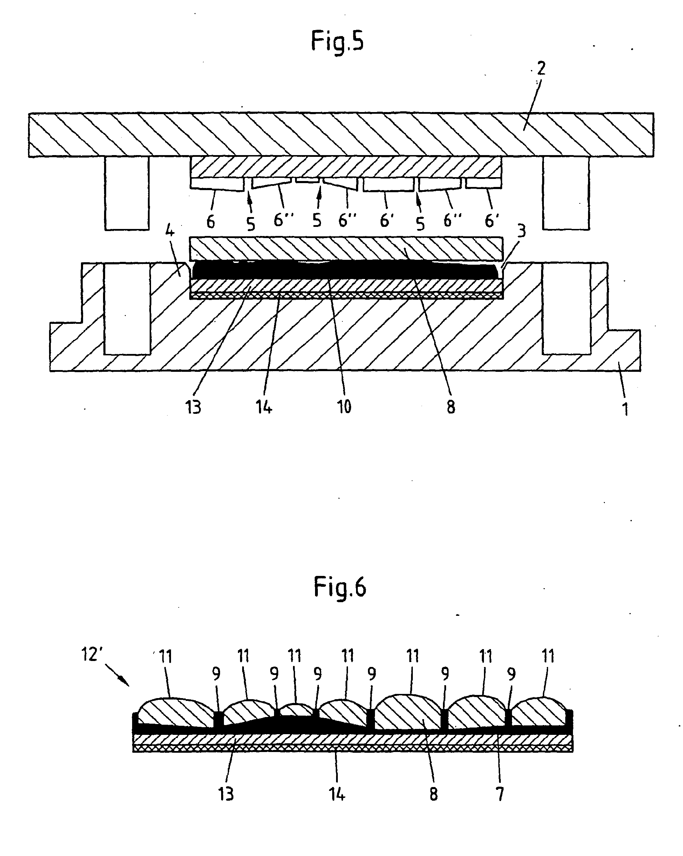

Des weiteren liegt es im Rahmen der Erfindung, in der Schwerschicht 7 Bereich unterschiedlicher Dicke und/oder Dichte auszubilden. Dies ist beispielhaft in den Figuren 5 und 6 dargestellt. Es ist zu erkennen, dass die durch die Ausnehmungen 5 unterteilten Pressfelder 5 unterschiedlich weit in Richtung der Kavität 3 vorstehen. Die Pressfelder 6 sind hier wiederum unterschiedlich groß ausgebildet, wobei bestimmte Pressfelder 6' im Wesentlichen horizontale Pressflächen und andere Pressfelder 6" dazu geneigt verlaufende Pressflächen aufweisen. Ferner ist zu erkennen, dass die Ausnehmungen 5 unterschiedlich tief sowie unterschiedlich breit sind. Die örtliche Dicke bzw. Dichte der Schwerschicht 7 ist in Abhängigkeit der akustischen Erfordernisse am Einbauort des Verbundteils 12' gewählt.

Das erfindungsgemäße Verbundteil 12, 12' kann beispielsweise als Stirnwandverkleidung eines Kraftfahrzeuges ausgebildet werden. Eine andere bevorzugte Verwendung besteht als Kraftfahrzeug-Bodenverkleidung. In beiden Fällen kann die Schwerschicht 7 auf ihrer der Absorberlage 8 abgewandten Seite mit einer weiteren Absorberlage 13, insbesondere einer Schaumstofflage, einer Vliesstoffschicht und/oder einer Teppichware beschichtet sein.

Ein bevorzugtes Ausführungsbeispiel besteht insbesondere darin, dass die Schwerschicht 7 auf ihrer der Absorberlage 8 abgewandten Seite mit einer weiteren schallabsorbierenden Schaumstofflage 13 und einer damit verbundenen Teppichware 14 versehen ist. Die Verbindung der Teppichware 14 mit der Schaumstofflage 13 ist dabei akustisch offen ausgebildet. Die Verbindung kann z.B. aus einer Klebeverbindung bestehen, wobei der Klebstoff netzartig auf den Teppichrücken aufgetragen wird. Zu absorbierender Schall kann somit durch die strömungsoffene Teppichware und die offenen Maschen des Klebstoffnetzes in die Schaumstofflage 13 eindringen. Der Klebstoff enthält dabei vorzugsweise keramische Mikrokörper und/oder Mikrohohlkörper. Derartige Mikrokörper dienen der Versteifung der geformten Teppichware. Die Mikrohohlkörper sind dabei relativ leicht und aufgrund der in ihnen eingeschlossenen Luft akustisch wirksam.

Zur Herstellung eines derartigen Verbundteils 12 wird zunächst eine Teppichware 14, die rückseitig eine aufkaschierte, offenporige elastische Absorberlage 13 aufweist, mit ihrer Sichtseite nach unten in die Kavität 3 der Formpresse gelegt. Die Absorberlage 13 kann beispielsweise eine Dicke im Bereich von 4 bis 10 mm aufweisen. Sodann wird auf diese Absorberlage 13 im Strangablegeverfahren ein bestimmtes Volumen einer extrudierten Schwerschichtmasse 10, beispielsweise PE-EVA, aufgebracht und anschließend - wie oben beschrieben - eine zweite Absorberlage 8 aufgelegt, die eine Dicke im Bereich von 10 bis 50 mm aufweist. Die beiden Absorberlagen 8, 13 bestehen vorzugsweise aus weichelastischem PUR-Schaumstoff vom Polyether-Typ mit den oben für die Stauchhärte σ_{d40} und den Druckverformungsrest angegebenen Werten. Schließlich werden die Materiallagen 8, 10, 14 und 13 in der Formpresse zusammengepresst, wobei das Schwerschichtmaterial 10 unter Fließen in die Form der Schwerschicht 7 gepresst wird und dabei in die zweite Absorberlage 8 hinein- bzw. durch die zweite Absorberlage 8 hindurchgepresste Stege 9 bildet (vgl. Figuren 1 bis 6).

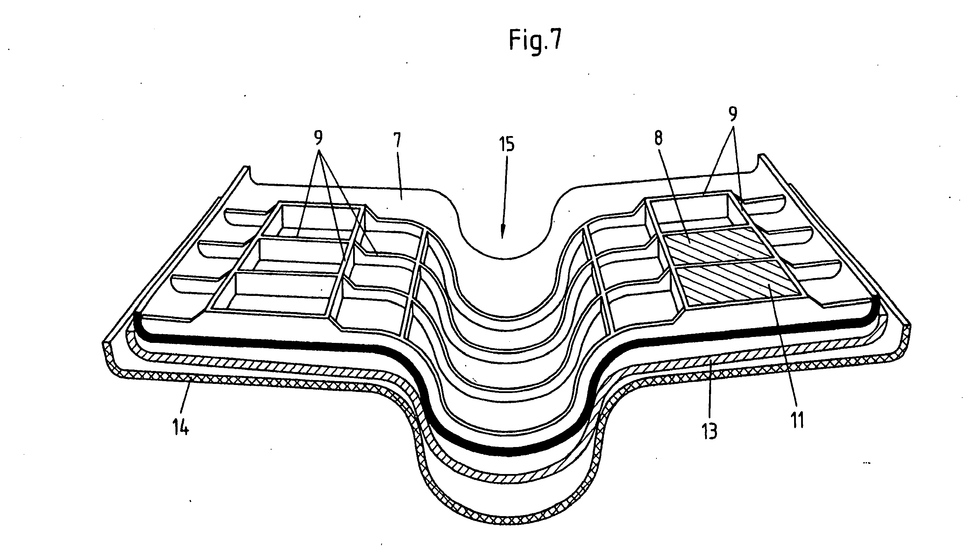

Fig. 7 zeigt die Unterseite eines erfindungsgemäß aufgebauten Teppichbodens, wobei die zweite Absorberlage 8 zur besseren Veranschaulichung der durch die Stege 9 gebildeten Verrippung größtenteils weggelassen ist. In dem Teppichboden ist eine rinnenförmige Ausprägung 15 ausgebildet, die beispielsweise der Anpassung des Teppichbodens an einen Getriebetunnel oder dergleichen dient. Insbesondere ist zu erkennen, dass die Stege 9 der Schwerschicht 7 unterschiedliche Höhen aufweisen. Die unterschiedlichen Steghöhen dienen der Anpassung des Teppichaufbaus an die Kontur des Fahrzeugbodenblechs.

Die Erfindung ist in ihrer Ausführung nicht auf die vorstehend beschriebenen Ausführungsbeispiele beschränkt. Vielmehr sind eine Reihe von Varianten denkbar, die auch bei grundsätzlich abweichender Gestaltung von dem in den beiliegenden Ansprüchen angegebenen Erfindungsgedanken Gebrauch machen. So können beispielsweise auch in der Kavität 3 des Unterwerkzeuges 1 Erhebungen und/oder Vertiefungen ausgebildet sein, die in der Schwerschicht 7 die Ausbildung von Bereichen unterschiedlicher Dicke und/oder Dichte bewirken. Ferner können die Formwerkzeuge 1, 2 zapfenartige Vorsprünge und diesen zugeordnete Ausnehmungen aufweisen, mit denen sich in dem schallisolierenden Verbundteil 12, 12' Durchbrechungen bzw. tüllenförmige Ausprägungen für die Durchleitung von Kabelsträngen, Schlauchleitungen und dergleichen ausbilden lassen.

## Patentansprüche

1. Schallisolierendes Verbundteil, insbesondere für Kraftfahrzeuge, mit einer Schwerschicht (7) und mindestens einer Absorberlage (8) aus offenporigem, elastischem Absorbermaterial, wobei an der Schwerschicht (7) eine Mehrzahl von Stegen (9) gitternetzartig ausgeformt ist, die aus dem Material der Schwerschicht gebildet sind, und wobei das die Stege (9) bildende Schwerschichtmaterial durch die Absorberlage hindurchgepresst ist,
**dadurch gekennzeichnet, dass**
die Stege (9) die Absorberlage (8) in eine Mehrzahl unterschiedlich großer und unterschiedlich dicker Absorberbereiche (11) unterteilen, welche gegenüber den Stegen (9) polsterartig vorstehen.

2. Verbundteil nach Anspruch 1,
**dadurch gekennzeichnet, dass**
die Stege (9) aus unterschiedlichen hohen und/oder unterschiedlichen breiten Stegen bestehen.

3. Verbundteil nach Anspruch 1 oder 2,
**dadurch gekennzeichnet, dass**
die Schwerschicht (7) Bereiche unterschiedlicher Dicke und/oder Dichte aufweist.

4. Verbundteil nach einem der Ansprüche 1 bis 3,
**dadurch gekennzeichnet, dass**
die Absorberlage (8) aus Polyurethan-Schaumstoff vom Polyether-Typ gebildet ist.

5. Verbundteil nach einem der Ansprüche 1 bis 4,
**dadurch gekennzeichnet, dass**
die Absorberlage (8, 13) aus einem Schaumstoff gebildet ist, der eine Stauchhärte σ_{d40} von nicht weniger als 4 kPa und einen Druckverformungsrest bei vorherigem Zusammendrücken um 50 % und einer 72-stündigen Lagerung bei 70°C im Bereich von 3 bis 6 % aufweist.

6. Verbundteil nach einem der Ansprüche 1 bis 5,
**dadurch gekennzeichnet, dass**
die Schwerschicht (7) auf ihrer der Absorberlage (8) abgewandten Seite mit einer weiteren Absorberlage (13, 14) beschichtet ist.

7. Verbundteil nach Anspruch 6,
**dadurch gekennzeichnet, dass**
die weitere Absorberlage (13) aus einer Schaumstofflage, Vliesstoffschicht und/oder Teppichware (14) besteht.

8. Verbundteil nach einem der Ansprüche 1 bis 6,
**dadurch gekennzeichnet, dass**
die Schwerschicht (7) auf ihrer der Absorberlage (8) abgewandten Seite mit einer weiteren Absorberlage (13) und einer damit verbundenen Teppichware (14) versehen ist.

9. Verbundteil nach Anspruch 8,
**dadurch gekennzeichnet, dass**
die Verbindung der Teppichware (14) mit der weiteren Absorberlage (13) akustisch offen ausgebildet ist.

10. Verbundteil nach Anspruch 8 oder 9,
**dadurch gekennzeichnet, dass**
die Teppichware (14) und die weitere Absorberlage (13) miteinander verklebt sind, wobei der Klebstoff keramische Mikrokörper und/oder Mikrohohlkörper enthält.

## Claims

1. A sound-insulating composite part, particularly for motor vehicles, comprising a heavy layer (7) and at least one absorber layer (8) made of open-pored, elastic absorbing material, multiple webs (9) being molded on the heavy layer (7), which are made of the material of the heavy layer, and the heavy layer material forming the webs (9) being pressed through the absorber layer,
**characterized in that** the webs (9) divide the absorber layer (8) into multiple absorber areas (11) of different sizes and different thicknesses which project like cushions in relation to the webs (9).

2. The composite part according to Claim 1,
**characterized in that** the webs (9) comprise webs of different heights and/or different widths.

3. The composite part according to Claim 1 or 2,
**characterized in that** the heavy layer (7) has areas of different thickness and/or density.

4. The composite part according to one of Claims 1 through 3,
**characterized in that** the absorber layer (8) is made of polyurethane foam of the polyether type.

5. The composite part according to one of Claims 1 through 4,
**characterized in that** the absorber layer (8, 13) is made of a foam which has a compression hardness σ_{d40} of not less than 4 kPa and a permanent set upon prior compression by 50% and a 72-hour storage at 70°C in the range from 3 to 6%.

6. The composite part according to one of Claims 1 through 5,
**characterized in that** the heavy layer (7) is coated with a further absorber layer (13, 14) on its side facing away from the absorber layer (8).

7. The composite part according to Claim 6,
**characterized in that** the further absorber layer (13) comprises a foam layer, nonwoven material layer, and/or carpet product (14).

8. The composite part according to one of Claims 1 through 6,
**characterized in that** the heavy layer (7) is provided with a further absorber layer (13) and a carpet product (14) connected thereto on its side facing away from the absorber layer (8).

9. The composite part according to Claim 8,
**characterized in that** the connection of the carpet product (14) to the further absorber layer (13) is implemented as acoustically open.

10. The composite part according to Claim 8 or 9,
**characterized in that** the carpet product (14) and the further absorber layer (13) are glued to one another, the adhesive containing ceramic microbodies and/or hollow microbodies.

## Revendications

1. Pièce composite insonorisante, en particulier pour véhicules à moteur, avec une couche lourde (7) et au moins une couche absorbante (8) en matière absorbante à pores ouverts, élastique, dans laquelle de multiples âmes (9), qui sont constituées de la matière de la couche lourde, sont formées à la manière d'une grille sur la couche lourde (7), et dans laquelle la matière de la couche lourde constituant les âmes (9) est pressée à travers la couche absorbante,
**caractérisée en ce que**
les âmes (9) divisent la couche absorbante (8) en de multiples zones d'absorption (11) d'épaisseur et de grandeur différentes, qui dépassent d'âmes (9) à la manière d'un capitonnage.

2. Pièce composite selon la revendication 1, **caractérisée en ce que** les âmes (9) se composent de pattes de hauteur et/ou de largeur différentes.

3. Pièce composite selon la revendication 1 ou 2, **caractérisée en ce que** la couche lourde (7) présente des régions d'épaisseur et/ou de densité différentes.

4. Pièce composite selon l'une des revendications 1 à 3, **caractérisée en ce que** la couche absorbante (8) est constituée d'une mousse de polyuréthane du type polyéther,

5. Pièce composite selon l'une des revendications 1 à 4, **caractérisée en ce que** la couche absorbante (8, 13) est constituée d'une mousse dont la résistance à la compression σ_{d40} n'est pas inférieure à 4 kPa, et présente une déformation permanente de compression dans le domaine de 3 à 6 % après compression antérieure de 50 % et stockage à 70°C pendant 72 heures.

6. Pièce composite selon l'une des revendications 1 à 5, **caractérisée en ce que** la couche lourde (7) est recouverte sur sa face opposée à la couche absorbante (8) d'une couche absorbante (13, 14) supplémentaire.

7. Pièce composite selon la revendication 6, **caractérisée en ce que** la couche absorbante supplémentaire (13) est constituée d'une couche de mousse, d'une couche de non-tissé et/ou d'un tapis (14).

8. Pièce composite selon l'une des revendications 1 à 6, **caractérisée en ce que** la couche lourde (7) est pourvue sur sa face opposée à la couche absorbante (8) d'une couche absorbante (13) supplémentaire et d'un tapis (14) relié à celle-ci.

9. Pièce composite selon la revendication 8, **caractérisée en ce que** la liaison du tapis (14) à la couche absorbante supplémentaire (13) est mise en oeuvre d'une manière acoustiquement ouverte.

10. Pièce composite selon la revendication 8 ou 9, **caractérisée en ce que** le tapis (14) et la couche absorbante supplémentaire (13) sont collés ensemble, la colle contenant des micro-éléments en céramique et/ou des micro-éléments creux.
